# EUROPÄISCHE PATENTSCHRIFT

(11) **EP 1 180 079 B1**
(45) Veröffentlichungstag und Bekanntmachung des Hinweises auf die Patenterteilung: **02.07.2003**
(21) Anmeldenummer: 00926926.7
(22) Anmeldetag: 14.04.2000
(51) Int. Cl.: B60T 13/575

(54) **BREMSKRAFTÜBERTRAGUNGSMECHANISMUS FÜR EINEN BREMSKRAFTVERSTÄRKER**
BRAKE FORCE TRANSMISSION MECHANISM FOR A BRAKE BOOSTER
MECANISME DE TRANSMISSION DE LA FORCE DE FREINAGE DESTINE A UN SERVO-FREIN

(30) Priorität: 16.04.1999 DE 19917281
(43) Veröffentlichungstag der Anmeldung: 20.02.2002
(73) Patentinhaber: Continental Teves AG & Co. oHG, 60488 Frankfurt (DE)
(72) Erfinder: SCHONLAU, Jürgen, D-65396 Walluf (DE); FEIGEL, Hans-Jörg, D-61191 Rosbach (DE)
(86) Internationale Anmeldenummer: EP0003366
(87) Internationale Veröffentlichungsnummer: WO00063055

(56) Entgegenhaltungen:
- WO-A-95/01272
- DE-A- 19 750 514
- DE-A- 19 755 442
- DE-A- 19 841 150

## Beschreibung

Die Erfindung betrifft einen Bremskraftübertragungsmechanismus für einen Bremskraftverstärker gemäß dem Oberbegriff des Anspruchs 1.

Ein derartiger Übertragungsmechanismus ist beispielsweise aus der EP 705 190 B1 bekannt. Der übertragungsmechanismus besitzt ein auf einer Eingangsseite oder auf einer Ausgangsseite angeordnetes und auch federnd vorgespanntes, bewegbares Druckstück, welches durch Flächenverhältnisänderung auf der Eingangsseite oder auf der Ausgangsseite eine Steigerung des Verstärkungsverhältnis bewirkt. Um die Feder mit der Vorspannkraft zu beaufschlagen, ist ein diese kapselnder Käfig mit Widerlagern vorgesehen. Wenn das Druckstück mit Feder auf der Ausgangsseite angeordnet wird, mit anderen Worten in die pneumatischen Kammern des Bremskraftverstärkers hineinragt, reduziert dies nicht nur die für die Kraftverstärkung verantwortliche wirksame Fläche, sondern auch den Bauraum, welcher für den Einschub eines hydraulischen Bremskraftverstärkers genutzt werden kann. Anders ausgedrückt würde die Verwendung eines nicht hinsichtlich seiner Baulänge reduzierten Hauptbremszylinders zu einer Baulängenvergrößerung des Gesamtsystems aus Hauptbremszylinder und Bremskraftverstärker führen. Andererseits scheint eine zusätzliche Baulängenreduktion bei Hauptbremszylindern nicht mit vertretbarem Aufwand darstellbar. Folglich ist diese beschriebene Variante mit dem Nachteil verknüpft, daß die Baulänge des Gesamtsystems anwächst, obwohl der Trend infolge immer kleiner Einbauräume klar in Richtung Baugrößenminimierung (bei erweiterter Funktionalität) weist.

Gemäß einer anderen in der EP 705 190 B1 beschriebenen Anordnung ist die Druckstück-Federanordnung auf der Eingangsseite (Ventilkolbenseitig) vorgesehen. Diese Maßnahme führt zu einer Baulängenvergrößerung des Bremskraftverstärkers auf seiner dem Fahrzeugführer zugewandten Seite. Ein wesentlicher Nachteil aller Lösungen ist, daß ein Käfig zur Kapselung der Feder eine Vielzahl gesonderter Bauteile erfordert, welche nicht nur bevorratet sondern selbstverständlich auch hergestellt und montiert werden müssen. Dies verursacht einen hohen Bau- und Kostenaufwand.

Ein zumindest in weiten Teilen mit der EP 705 190 B1 übereinstimmender, jedoch einfacherer Übertragungsmechanismus ist ferner der JP-Sho-61-205858 entnehmbar.

Aufgabe der vorliegenden Erfindung ist es, einen Übertragungsmechanismus bereitzustellen, welcher mit einer besonders geringen Baugröße einfach in einen Bremskraftverstärker vom Standardtyp integrierbar ist. Es soll folglich ermöglicht werden, den Übertragungsmechanismus nach Wunsch auch in bereits bestehende Bremskraftverstärker einsetzen zu können, ohne teure Neu- oder Änderungskonstruktionen vornehmen zu müssen. Eine weitere Aufgabe der Erfindung ist es, einen Übertragungsmechanismus vorzusehen, welcher mit mechanisch oder elektronisch wirksamen Mitteln für die Bremsassistenz kombinierbar ist.

Diese Aufgaben werden gemäß der Erfindung durch die Merkmale des kennzeichnenden Teils des Anspruchs 1 gelöst.

In vorteilhafter Ausgestaltung der Erfindung ist ein zweites größeres Übersetzungsverhältnis dadurch vorgesehen, daß oberhalb einem bestimmten Bremskraftniveau eine Deformation des Reaktionselementes im Bereich der Wirkfläche des Ausgangselementes eine Bewegung von wenigstens einem Teil des Kraftübertragungsmechanismus derart bewirkt, und die Bewegung derart auf die Eingangsseite überträgt, daß eine Änderung der dem Eingangsglied zugeordneten Wirkfläche eintritt. Ein wesentlicher Vorteil der Erfindung ist, daß die bewegbaren Teile, welche das Wirkflächenverhältnis beeinflussen, sowohl auf der Eingangsseite wie auch auf der Ausgangsseite angeordnet und wirksam sind, so daß auf keiner der Seiten ein zu großer Bauraum beansprucht wird. Mit anderen Worten wird erfindungsgemäß der erforderlich Bauraum nicht ausschließlich auf einer Seite beansprucht, und für die Anwendung bei bekannten Bremskraftverstärkern ist lediglich eine geringfügige Änderung von Eingangselement, Ausgangselement und Reaktionselement erforderlich. Schließlich erlaubt die Erfindung erstmals eine Kombination mit einem Bremsassistenzsystem gemäß der PCT/EP98/07314.

In vorteilhafter Ausgestaltung der Erfindung ist dem bewegbaren Teil des Übertragungsmechanismus eine eingangsseitige Teilwirkfläche zugeordnet, so daß ab dem bestimmten Bremskraftniveau eine Reaktionskraftübertragung auf das Eingangselement über eine Ventilkolbenwirkläche erfolgt. Mit anderen Worten erfolgt eine Entkoppelung des Fahrzeugführers von einem Teil der Bremsreaktionskräfte.

Eine vollständige Entkoppelung von den Reaktionskräften wird nicht vorgenommen weil dem Fahrzeugführer sonst eine Orientierungsmöglichkeit als Anhaltspunkt für die Regelung genommen werden würde.

Es ist ferner vorteilhaft, wenn das zweite Übersetzungsverhältnis dadurch definiert ist, daß die dem Ausgangselement zugeordnete Wirkfläche vermindert um die Teilwirkfläche (Zählerausdruck), zu der Ventilkolbenstirnfläche vermindert um die Teilwirkfläche (Nennerausdruck) ins Verhältnis gesetzt wird. Das derart definierte Übersetzungsverhältnis beschreibt gleichzeitig das Verhältnis zwischen Ausgangskraft zu der Eingangskraft unter der Randbedingung eines hohen Bremskraftniveaus.

Weiterhin ist bei dem Übertragungsmechanismus die Teilwirkfläche des bewegbaren Teils kleiner ausgebildet, als die gesamte Ventilkolbenstirnfläche.

Erfindungsgemäß besitzt der Ventilkolben eine Sackbohrung, innerhalb der das bewegbare Teil mit einem zylindrischen Zapfen geführt ist. An der mit der eingangsseitigen Teilwirkfläche versehenen Stirnseite ist eine, das Reaktionselement durchgreifende, Verlängerung vorgesehen. Die in axialer Richtung vorgesehene Verlängerung durchragt das Reaktionselement vollständig und tritt mit einem Ende auf der Ausgangsseite aus. Dort ist eine ausgangsseitige Teilwirkfläche vorgesehen, welche in Betätigungsrichtung an der Verlängerung angreift, und im übrigen mittels einer Feder in Anlage an dem Reaktionselement gehalten wird. Die Feder ist zumindest mit einem Teilabschnitt ihrer Länge in einer Sackbohrung des Ausgangselementes geführt. Diese Bauweise verringert den axialen Platzbedarf, weil zumindest Teile des Übertragungsmechanismus in einer Sackbohrung des Eingangselementes beziehungsweise des Ausgangselementes angeordnet sind.

Weitere Einzelheiten der Erfindung gehen aus Unteransprüchen im Zusammenhang mit der Beschreibung und der Zeichnung hervor. In der Zeichnung zeigt:
Fig. 1 Erfindungsgemäßer Übertragungsmechanismus gemäß einer ersten Ausführungsform in Bremsbereitschaftsstellung im Schnitt sowie in größerem Maßstab;
Fig. 2 Übertragungsmechanismus gemäß einer zweiten Ausführungsform in Bremsbereitschaftsstellung im Schnitt sowie etwa maßstabsgetreu abgebildet;
Fig. 3 der Übertragungsmechanismus gemäß Fig. 2 in einer Bremsstellung mit dem ersten Übersetzungsverhältnis;
Fig. 4 der Übertragungsmechanismus gemäß Fig. 2 in einer Bremsstellung mit dem zweiten Übersetzungsverhältnis.

Nachstehend wird auf den Aufbau und die Funktion des Übertragungsmechanismus 1 detailliert eingegangen, wobei die grundsätzliche Funktion eines Bremskraftverstärkers wie sie beispielhaft der PCT/EP98/07314 zu entnehmen ist, als bekannt vorausgesetzt wird.

Grundsätzlich bekannte Bremskraftverstärker verfügen idealisiert betrachtet über den gesamten Betriebsbereich bis hin zu dem sogenannten Aussteuerungspunkt über ein konstantes Übersetzungsverhältnis, wobei die hervorgerufene Ausgangskraft (Fußkraft und Verstärkungskraft) linear über der Eingangskraft (Fußkraft) ansteigt. Ganz grundsätzlich ist die Übersetzung, welche das Pedalgefühl des Fahrers im wesentlichen beeinflusst, durch das Verhältnis der dem Ausgangselement zugeordneten Wirkfläche (A4) zu der dem Eingangselement zugeordneten Wirkfläche (A2) definiert. Für höhere Bremsleistungen, das heißt bei höherem Bremskraftniveau wird es als positiv angesehen, den Fahrer stärker zu unterstützen. Es wird mit anderen Worten ein größeres Übersetzungsverhältnis hervorgerufen, wie es beispielsweise der JP-Sho-61-205858 zu entnehmen ist.

Ein Übertragungsmechanismus 1 nach der Erfindung umfaßt neben anderen, dem Bremskraftverstärker zuzurechnenden Teilen, welche hier keinen entscheidenden Einfluß haben und deshalb nachstehend nicht beschrieben werden, ein in einem Steuergehäuse 2 mit einem ersten Dichtsitz 3 bewegbar angeordnetes Eingangselement 4 mit einem Ventilkolben 5 sowie ein Ausgangselement 6 zur Betätigung eines nicht gezeichneten Hauptbremszylinder. Zwischen dem Eingangselement 4 und dem Ausgangselement 6 befindet sich ein vorzugsweise scheibenförmiges und aus Kunststoffwerkstoff oder Gummiwerkstoff bestehendes elastisches Reaktionselement 7, welches allseitig durch Flächen von Teilen des Übertragungsmechanismus 1 umgeben, mit anderen Worten gewissermaßen gekapselt ist. Das elastische Reaktionselement 7 verhält sich unter Druckbeanspruchung wie ein inkompressibles Fluid nach den Gesetzen der Volumenkonstanz und fungiert gewissermaßen als Mittler zwischen den über das Eingangselement 4 eingeleiteten Fußkräften und den Bremsreaktionskräften, welche aus dem Fahrzeugbremssystem auf den Fahrzeugführer zurückwirken. Folglich herrscht bei jeder Bremsbetätigungsstellung ein Kraftgleichgewicht an dem Reaktionselement 7. Der Ventilkolben 5 weist an einer reaktionselementseitigen Ventilkolbenstirnfläche 8 (A2-A1) eine Sackbohrung 9 auf, innerhalb derer ein relativ zu dem Steuergehäuse 2, Ventilkolben 5 und Ausgangselement 6 bewegbares Teil 10 beispielsweise mit einem Zylinderabschnitt 11 geführt ist. Der Ventilkolben 5 umgreift den Umfang des Teil 10 und das Reaktionselement 7 ist mit einer Kombination aus Ventilkolbenstirnfläche 8 (A2-A1) und einer Hilfskolbenstirnfläche 12 (A1) beaufschlagbar. Dabei ist das Mittel 10 mit einer Endfläche 13 an einen Boden 14 der Sackbohrung 9 anlegbar. Dies gilt, wie nachstehend noch ausführlicher beschrieben wird, für geringes Bremskraftniveau, bei dem innerhalb dem Reaktionselement geringe Drücke wirken.

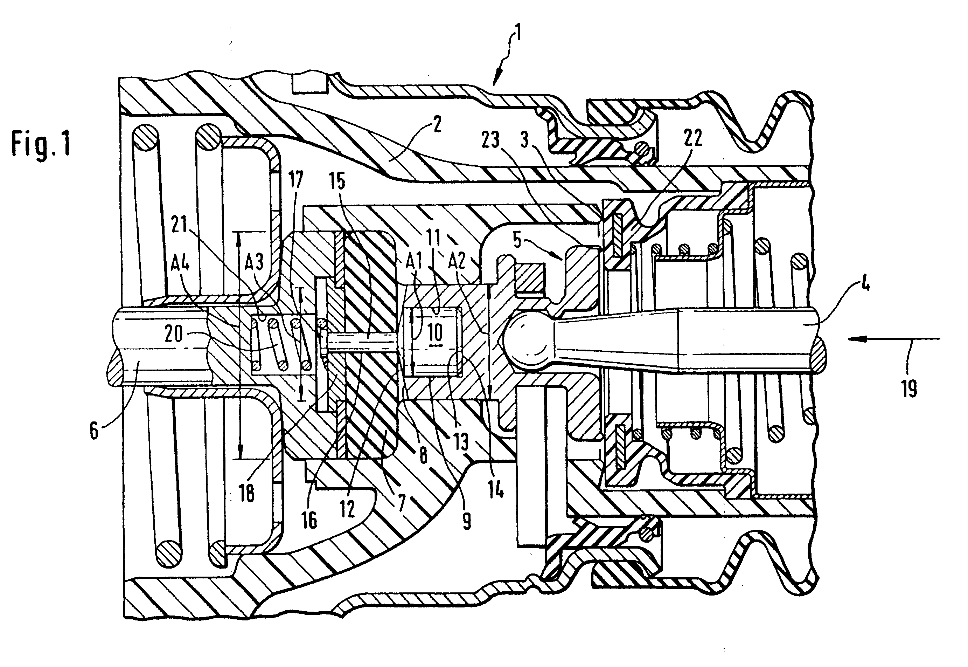

Das Teil 10 ist gemäß den Ausführungsbeispielen quasi als Hilfskolben ausgebildet und wird wie folgt mit seiner Hilfskolbenstirnfläche 12 (A1) in die Reaktionskraftübertragung eingebunden. Das Teil 10 ist zu diesem Zweck an seinem reaktionselementseitigen Ende mit einer Verlängerung 15 versehen, welche eine Bohrung 16 in dem Reaktionselement 7 durchgreift und mit einem Ende 17 aus dieser austritt. An diesem Ende 17 greift eine ausgangsseitige Teilwirkfläche 18 (A3) an der Verlängerung 15 derart an, daß die Teilwirkfläche 18 (A3) eine Mitnahme des bewegbaren Teiles 10 in Betätigungsrichtung (vgl. Pfeilrichtung 19 in der Figur) hervorrufen kann. Die Teilwirkfläche 18 (A3) wird mit Hilfe eines vorgespannten Federelementes 20, beispielsweise einer Schrauben- oder Tellerfeder grundsätzlich in Anlage an dem Reaktionselement 7 gehalten. Die Federkonstante, deren Vorspannkraft sowie die Flächengröße der Teilwirkfläche 18 (A3) gehen wesentlich als konstruktive Auslegungsgrößen für die Übersetzungsänderung ein. Diese bestimmen letztendlich den Zeitpunkt, ab dem die Übersetzungsänderung eintritt. Wie Figur 1 verdeutlicht, ist auch das Ausgangselement 6 mit einer Sackbohrung 21 versehen, so daß zumindest ein Teilabschnitt des Federelementes 20 innerhalb der Sackbohrung 21 geführt angeordnet ist. Dadurch und durch die eingangsseitige Sackbohrung mit dem darin geführten Teil 10 reduziert sich die axiale Baulänge des Übertragungsmechanismus 1 wesentlich. Anders ausgedrückt verlängert sich die Baulänge einer erfindungsgemäßen Vorrichtung nur unwesentlich um etwa den axialen Überstand der Verlängerung 15 über die ausgangsseitige Anlagefläche des Reaktionselementes 7.

Die Funktion des Übertragungsmechanismus 1 ist für die Ausführungsformen wie folgt.

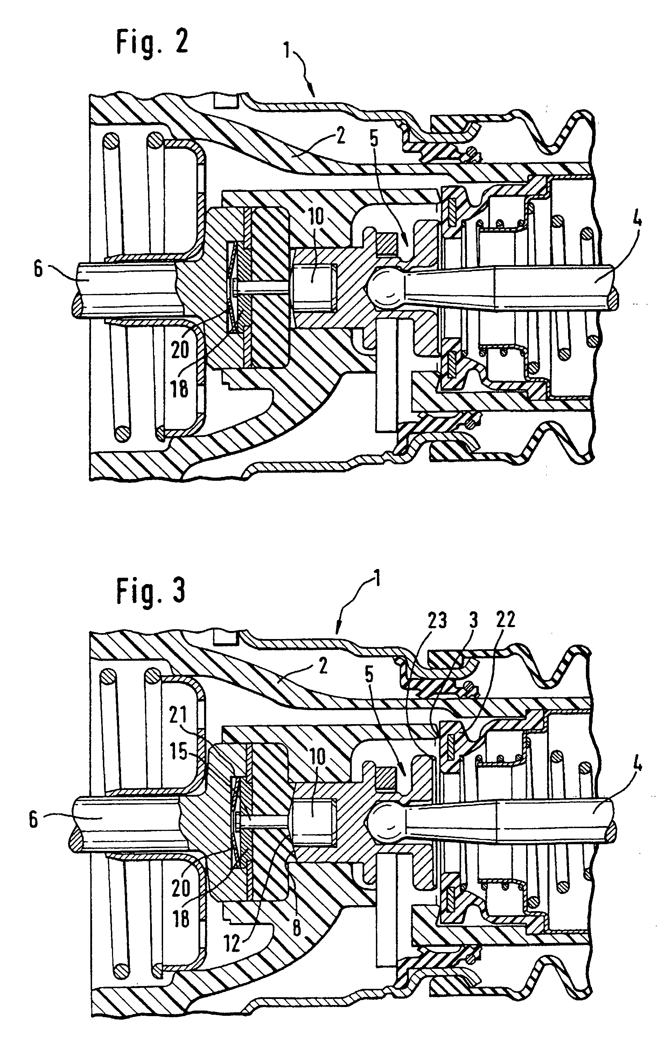

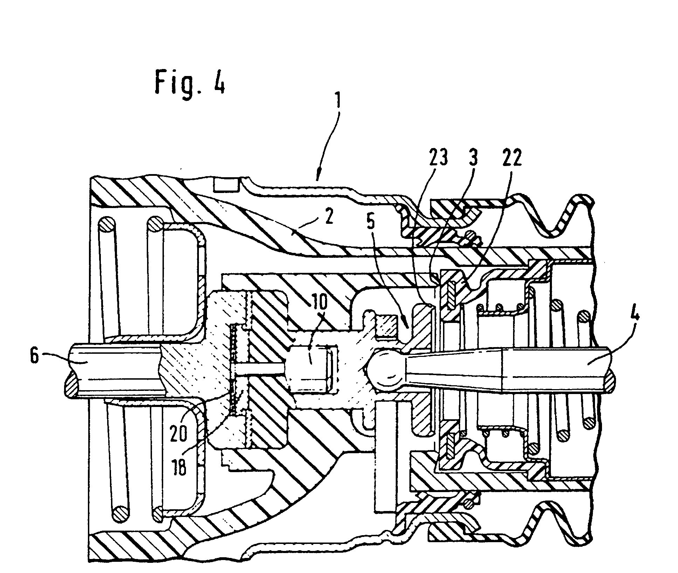

In einer Bremsbereitschaftstellung gemäß Fig. 1 oder 2 ist das Eingangselement 4 ausreichend weit in Betätigungsrichtung 19 verschoben, so daß das in den einzelnen Betätigungsaggregaten, insbesondere einer Pedalanordnung und einem Bremskraftverstärker vorliegende Spiel aufgezehrt ist, und ein Dichtkörper 22 den an dem Steuergehäuse vorgesehenen ersten Dichtsitz 3, welcher eine Verbindung zwischen einer Vakuumkammer konstanten Druckes und einer Arbeitkammer variablen Druckes voneinander trennt. Ein zweiter Dichtsitz 23, welcher die Arbeitskammer von der Umgebungsatmosphäre trennt, befindet sich hierbei ebenfalls noch in Anlage an dem Dichtkörper 22, so daß noch kein Atmosphärendruck in eine Arbeitskammer einströmen kann. Das Bremssystem ist gewissermaßen bremsbereit aber noch bremskraftfrei. Jedes zusätzliche Betätigungsinkrement führt zu dem Abheben des zweiten Dichtsitz 23 von dem Dichtkörper 22 und folglich zu einem Bremsdruckaufbau im Bremssystem. Bei geringem Bremsniveau mit geringem Druck in dem Reaktionselement 7 erfolgt die Reaktionskraftübertragung auf das Eingangselement 4 über den Ventilkolben 5 mit der Ventilkolbenstirnfläche 8 (A2-A1) zusammen mit dem Hilfskolben und der zugeordneten Hilfskolbenstirnfläche 12 (A1), wie dies in der Figur 3 dargestellt ist. Das erste Übersetzungsverhältnis des Übertragungsmechanismus 1 wird folglich durch den Quotienten der dem Ausgangselement 6 zugeordneten Wirkfläche (A4) (Zählerausdruck) zu der dem Eingangselement 4 zugeordneten Wirkfläche (A2) (Nennerausdruck), also einer Addition der unmittelbaren Ventilkolbenstirnfläche 8 (Kreisringfläche ) und der Hilfskolbenstirnfläche 12 (A1). Auch leicht erhöhte Bremskräfte wie in Fig.3 verdeutlicht verändern diesen Zustand nicht, solange der in dem Reaktionselement 7 vorliegende Druck nicht ausreicht, um die auf die ausgangsseitige Teilwirkfläche 18 (A3) einwirkende Federkraft zu überwinden. Ab einem vorgegebenen Bremskraftniveau, welches beispielsweise von der Größe der Teilwirkfläche 18 (A3) und der Federvorspannkraft abhängt, wird das Teil 10 durch die Verformung des Reaktionselementes 7 und die von der Teilwirkfläche 18 (A3) aufgebrachte Zugkraft in Betätigungsrichtung 19 gezogen (Fig. 4). Dadurch entfernt sich die Endfläche 13 des Teil 10 von dem Boden 14, und die auf der Eingangsseite wirksame Fläche für die Reaktionskraftübertragung wird um die Hilfskolbenwirkfläche 12 (A1) reduziert. Dadurch kommt das zweite größere Übersetzungsverhältnis zum Tragen, welches durch einen Quotienten definiert ist, bei dem die dem Ausgangselement 6 zugeordnete Wirkfläche (A4) vermindert um die Hilfskolbenwirkfläche 12 (A1) (Zählerausdruck) ins Verhältnis gesetzt wird zu der Gesamtwirkfläche des Eingangselementes 4 (A2) vermindert um die Hilfskolbenwirkfläche 12 (A1) (Nennerausdruck). Folglich wird also nicht nur die dem Eingangselement zugeordnete Wirkfläche A2 um die Hilfskolbenwirkfläche 12 (A1) vermindert, sondern auch die dem Ausgangselement zugeordnete Wirkfläche A4. Dabei gilt, daß A4 größer ist als A2 und deren Flächeninhalt wiederum größer ist als A1.

Weil der Platzbedarf des Bremskraftübertragungsmechanismus äußerst gering ist, und die Bauteile in das Innere zwangsläufig erforderlicher Bauteile (Eingangsglied, Ausgangsglied, Reaktionselement) integriert sind, lässt sich der Mechanismus einfach mit einem mechanischen Bremsassistenzsystem wie es aus der PCT/EP98/07314 der Anmelderin bekannt ist, kombinieren. Eine derartige Kombination ist mit dem Vorteil verbunden, daß der Fahrzeugführer in einem jeden Fall, welcher höhere Bremsdrücke erfordert zusätzlich unterstützt wird. Wenn höhere Bremsdrücke bei langsamer Betätigungsgeschwindigkeit (ohne nennenswerte Relativverschiebung zwischen Ventilkolben 5 und Steuergehäuse 2) nachgefragt werden, gewährleistet der vorliegende Mechanismus eine zweite, größere Übersetzung. Sofern eine bestimmte Relativverschiebung eine schnelle Betätigungsgeschwindigkeit indiziert, erfolgt der Eingriff des Bremsassistenzsystems, wie es detailliert in der oben genannten Anmeldung beschrieben ist.

## Patentansprüche

1. Bremskraftübertragungsmechanismus für einen Bremskraftverstärker mit einem elastischen Reaktionselement (7), einem Eingangselement (4) mit einer zugeordneten Wirkfläche, einem Ausgangselement (6) mit einer zugeordneten Wirkfläche und mit einem ersten Übersetzungsverhältnis, welches durch ein, in Wirkverbindung mit dem Reaktionselement (7) stehendes Verhältnis der Wirkflächen definiert ist, sowie Mittel (10), welche ab einem bestimmten, in dem Reaktionselement (7) vorliegenden Druck, die in das Eingangselement (4) eingeleitete Reaktionskraft um einen bestimmten Anteil reduzieren, **dadurch gekennzeichnet, daß** das Mittel (10) das Reaktionselement (7) durchgreift.

2. Bremskraftübertragungsmechanismus nach Anspruch 1, **dadurch gekennzeichnet, daß** eine Deformation des Reaktionselementes (7) im Bereich der Wirkfläche des Ausgangselementes (6) eine Bewegung von wenigstens einem Teil (10) des Bremskraftübertragungsmechanismus (1) bewirkt und dieses die Bewegung derart auf die Eingangsseite überträgt, daß eine Änderung der dem Eingangselement (4) zugeordneten Wirkfläche eintritt.

3. Bremskraftübertragungsmechanismus nach einem oder mehreren der vorhergehenden Ansprüche, **dadurch gekennzeichnet, daß** das zweite größere Übersetzungsverhältnis durch das Verhältnis von der dem Ausgangselement (6) zugeordneten Wirkfläche A 4 zu der dem Eingangselement (4) zugeordneten Wirkfläche A 2 jeweils vermindert um eine konstante Teilwirkfläche A1 definiert ist.

4. Bremskraftübertragungsmechanismus nach einem oder mehreren der vorhergehenden Ansprüche, **dadurch gekennzeichnet, daß** das Teil (10) in einer Bohrung (9) des Ventilkolbens (5) geführt ist, und eine Verlängerung (15) aufweist, welche das Reaktionselement (7) durchgreift, und ausgangsseitig mit einem Ende (17) aus diesem herausragt.

5. Bremskraftübertragungsmechanismus nach einem oder mehreren der vorhergehenden Ansprüche, **dadurch gekennzeichnet, daß** an dem Ende (17) eine ausgangsseitige Teilwirkfläche (18, bzw. A3) angreift.

6. Bremskraftübertragungsmechanismus nach einem oder mehreren der vorhergehenden Ansprüche, **dadurch gekennzeichnet, daß** ein Federelement (20) vorgesehen ist, welches sich mit einem Ende an der Teilwirkfläche (18) abstützt, und mit einem anderen Ende an dem Ausgangselement (6).

7. Bremskraftübertragungsmechanismus nach einem oder mehreren der vorhergehenden Ansprüche, **dadurch gekennzeichnet, daß** das Federelement (20) elastisch vorgespannt ist, und zumindest teilweise in einer Bohrung (21) des Ausgangselementes (6) angeordnet ist.

8. Bremskraftübertragungsmechanismus nach einem oder mehreren der vorhergehenden Ansprüche, **dadurch gekennzeichnet, daß** als Federelement (20) eine Schrauben- oder Tellerfeder vorgesehen ist.

9. Bremskraftübertragungsmechanismus nach einem oder mehreren der vorhergehenden Ansprüche, **dadurch gekennzeichnet, daß** ein Druckstück mit einer Wirkfläche für die Beaufschlagung des Reaktionselementes lösbar mit dem Steuergehäuse verbindbar ist.

10. Bremskraftübertragungsmechanismus nach einem oder mehreren der vorhergehenden Ansprüche, **dadurch gekennzeichnet, daß** das Mittel (10) in das Innere zwangsläufig erforderlicher Bauteile eines Bremskraftverstärkers integriert ist.

## Claims

1. Brake force transmission mechanism for a brake booster with an elastic reaction element (7), an input element (4) with an associated effective surface, an output element (6) with an associated effective surface and with a first transmission ratio which is defined by a ratio between the effective surfaces being in operative engagement and the reaction element (7), as well as a means (10) reducing the reaction force introduced into the input element (4) by a defined portion starting from a defined pressure prevailing in the reaction element (7),
**characterized in that** the means (10) extends through the reaction element (7).

2. Brake force transmission mechanism as claimed in claim 1,
**characterized in that** a deformation of the reaction element (7) in the area of the effective surface of the output element (6) causes a movement of at least one part (10) of the brake force transmission mechanism (1) and said part transmits the movement onto the input side in such a fashion that a change of the effective surface associated with the input element (4) occurs.

3. Brake force transmission mechanism as claimed in any one or more of the preceding claims,
**characterized in that** the second, greater transmission ratio is defined by the ratio between the effective surface A4 associated with the output element (6) and the effective surface A2 associated with the input element (4), in each case reduced by a constant partial effective surface A1.

4. Brake force transmission mechanism as claimed in any one or more of the preceding claims,
**characterized in that** the part (10) is guided in a bore (9) of the valve piston (5) and includes an extension (15) through which the reaction element (7) extends, said extension projecting with an end (17) from said reaction element (7) on the output side.

5. Brake force transmission mechanism as claimed in any one or more of the preceding claims,
**characterized in that** a partial effective surface (18 or, respectively, A3) on the output side makes catch at the end (17).

6. Brake force transmission mechanism as claimed in any one or more of the preceding claims,
**characterized in that** a spring element (20) is provided which is supported on the partial effective surface (18) with one end and on the output element (6) with another end.

7. Brake force transmission mechanism as claimed in any one or more of the preceding claims,
**characterized in that** the spring element (20) is elastically preloaded and at least partly arranged in a bore (21) of the output element (6).

8. Brake force transmission mechanism as claimed in any one or more of the preceding claims,
**characterized in that** a helical or cup spring is provided as spring element (20).

9. Brake force transmission mechanism as claimed in any one or more of the preceding claims,
**characterized in that** a pressure member with an effective surface for application of the reaction element is detachably connectable to the control housing.

10. Brake force transmission mechanism as claimed in any one or more of the preceding claims,
**characterized in that** the means (10) is integrated into the interior of necessary components of a brake booster.

## Revendications

1. Mécanisme de transmission de force de freinage pour un amplificateur de force de freinage comprenant un élément de réaction (7) élastique, un élément d'entrée (4) présentant une surface d'action associée, un élément de sortie (6) présentant une surface d'action associée et un premier rapport de démultiplication qui est défini par un rapport des surfaces d'action qui coopère avec l'élément de réaction (7), ainsi que des moyens (10) qui, à partir d'une pression présente dans l'élément de réaction (7) déterminée, réduisent d'une proportion déterminée la force de réaction introduite dans l'élément d'entrée (4), **caractérisé en ce que** les moyens (10) traversent l'élément de réaction (7).

2. Mécanisme de transmission de force de freinage suivant la revendication 1, **caractérisé en ce qu'**une déformation de l'élément de réaction (7) dans la zone de la surface d'action de l'élément de sortie (6) provoque un déplacement d'au moins une partie (10) du mécanisme de transmission de force de freinage (1) et celui-ci transmet le déplacement du côté d'entrée d'une manière telle qu'il se produit une modification de la surface d'action associée à l'élément d'entrée (4).

3. Mécanisme de transmission de force de freinage suivant une ou plusieurs des revendications précédentes, **caractérisé en ce que** le second rapport de démultiplication plus grand est défini, chaque fois réduit d'une surface d'action partielle A1 constante, par le rapport de la surface d'action A4 associée à l'élément de sortie (6) à la surface d'action A2 associée à l'élément d'entrée (4).

4. Mécanisme de transmission de force de freinage suivant une ou plusieurs des revendications précédentes, **caractérisé en ce que** la partie (10) est guidée dans un alésage (9) du piston de valve (5) et comporte une partie de prolongement (15) qui traverse l'élément de réaction (7) et, du côté sortie, sort de celui-ci par une extrémité (17).

5. Mécanisme de transmission de force de freinage suivant une ou plusieurs des revendications précédentes, **caractérisé en ce qu'**une surface d'action partielle (18 ou A33) attaque l'extrémité (17).

6. Mécanisme de transmission de force de freinage suivant une ou plusieurs des revendications précédentes, **caractérisé en ce qu'**il est prévu un élément à action de ressort (20) qui prend appui, par une extrémité, sur la surface d'action partielle (18) et, par l'autre extrémité, sur l'élément de sortie (6).

7. Mécanisme de transmission de force de freinage suivant une ou plusieurs des revendications précédentes, **caractérisé en ce que** l'élément à action de ressort (20) est l'objet d'une précontrainte élastique et est disposé, au moins en partie, dans un alésage (21) de l'élément de sortie (6).

8. Mécanisme de transmission de force de freinage suivant une ou plusieurs des revendications précédentes, **caractérisé en ce qu'**un ressort hélicoïdal ou un ressort Belleville est prévu en tant qu'élément à action de ressort (20).

9. Mécanisme de transmission de force de freinage suivant une ou plusieurs des revendications précédentes, **caractérisé en ce qu'**une pièce de compression comportant une surface d'action pour la sollicitation de l'élément de réaction peut être reliée d'une manière séparable au boîtier de commande.

10. Mécanisme de transmission de force de freinage suivant une ou plusieurs des revendications précédentes, **caractérisé en ce que** les moyens (10) sont intégrés à l'intérieur de pièces d'un amplificateur de force de freinage qui sont impérativement nécessaires.
